**Europäisches Patentamt**

**European Patent Office**

**Office européen des brevets**

(19)

(11) Veröffentlichungsnummer: **0 144 035**

**A1**

(12)

# EUROPÄISCHE PATENTANMELDUNG

(21) Anmeldenummer: **84113945.4**

(22) Anmeldetag: **17.11.84**

(51) Int. Cl.⁴: **B 64 D 17/24**

(30) Priorität: **22.11.83 DE 3341990**

(43) Veröffentlichungstag der Anmeldung:
**12.06.85 Patentblatt 85/24**

(84) Benannte Vertragsstaaten:
**FR GB IT**

(71) Anmelder: **AUTOFLUG GMBH**
**Industriestrasse 10 Postfach 1180**
**D-2084 Rellingen(DE)**

(72) Erfinder: **Nöhren, Hubert**
**Astweg 51**
**D-2000 Hamburg 54(DE)**

(74) Vertreter: **Kühnemann, Klaus et al,**
**Sonderburgstrasse 36**
**D-4000 Düsseldorf 11(DE)**

(54) **Rotationsfallschirm.**

(57) Mit der Erfindung soll ein Rotationsfallschirm zur Verfügung gestellt werden, der eine Übertragung der Rotationsenergie auf eine am Schirm befestigte Last ermöglicht. Der dazu vorgesehe Rotationsfallschirm ist gekennzeichnet durch eine Kappe, die über Fangleinen mit einem Lastträger verbunden ist, wobei die Fangleinen (12a bis h) in Bezug auf die Mittenlängsachse (15) des Fallschirms (10) versetzt angeordnet sind.

Fig. 1

0144035

Autoflug GmbH
Industriestraße 10
2084 Rellingen 2

B e s c h r e i b u n g

Rotationsfallschirm

Die Erfindung betrifft einen Rotationsfallschirm gemäß dem Oberbegriff des Hauptanspruches.

Rotationsfallschirme als solche sind bekannt. Als Rotationsfallschirme werden solche Fallschirmsysteme bezeichnet, bei denen sich die Kappe um ihre eigene Längsachse im Fall dreht.

Aufgrund der Rotation der Fallschirmkappe soll insbesondere eine Stabilisierung des Fallschirmsystems als Ganzes, darüber hinaus aber auch eine Verringerung des sogenannten Pendelwinkels, das heißt des Winkels, um den beispielsweise eine anhängende Last in Bezug auf die Fallschirmlängsachse im Fall pendelt, erreicht werden.

Dabei sind Rotationsfallschirme bekannt, deren Pendelwinkel gegenüber konventionellen Fallschirmsystemen von plus/minus 25 Grad auf plus/minus
3 Grad gesenkt werden konnte.

Die Rotationseigenschaft der Fallschirmkappe wird
dabei durch verschiedene Maßnahmen erreicht. Beispielsweise ist es bekannt, die einzelnen, die
Fallschirmkappe bildenden Bahnen, unsymmetrisch
anzuordnen. Eine weitere bekannte Ausführungsform
sieht vor, daß in den Bahnen der Fallschirmkappe
Öffnungen vorgesehen sind, die einen Düseneffekt
für die sie durchströmende Luft bewirken, wobei
es in Abhängigkeit von der Anordnung dieser Öffnungen
bzw. der einzelnen Bahnen der Fallschirmkappe zu
einer Rotationswirkung der Kappe insgesamt kommt.

Probleme ergeben sich dabei insoweit, als sich
beispielsweise bei einem Fallschirm mit angehängter
Last die einzelnen Fangleinen aufgrund der Rotation
der Fallschirmkappe verdrillen können, so daß es
zu Störungen im Fall, gegebenenfalls sogar zu einer
Funktionsuntüchtigkeit eines derartigen Fallschirms
kommen kann.

Auch hierzu sind bereits Lösungsvorschläge angeboten
worden, beispielsweise durch Zwischenschalten eines
sogenannten Drehwirbels zwischen Fallschirmkappe
und Last. Ein solcher Drehwirbel kann beispielsweise aus einem Kugellager bestehen, so daß gegebenenfalls von der Fallschirmkappe über die Fangleinen übertragene Drehmomente nicht auf die anhängende
Last übertragen werden.

Für besondere Anwendungsfälle kann es jedoch notwendig sein, daß auch eine Rotation der Last gewünscht
wird. Beispielhaft sei hier die Anordnung einer Kamera an einem Fallschirm genannt, die im Fall
Rundum-Aufnahmen machen soll. Hierzu bedarf es
einer Drehung der Last (Kamera), die entweder
separat erzeugt werden, oder über die Rotation
der Fallschirmkappe übertragen werden kann. Andere
Anwendungszwecke ergeben sich beispielsweise,
wenn Geräte zur Ortung bestimmter Objekte abgelassen
werden sollen.

Der Erfindung liegt die Aufgabe zugrunde, einen
Rotationsfallschirm zur Verfügung zu stellen, mit
dem nicht nur eine Rotation der Fallschirmkappe
erreichbar ist, sondern deren Rotationsenergie
nahezu verzögerungsfrei auf eine anhängende Last
unmittelbar oder mittelbar übertragen werden kann.

Erfindungsgemäß ist dazu ein Rotationsfallschirm
mit einer Kappe vorgesehen, die über Fangleinen
mit einem Lastträger verbunden ist, wobei die Fangleinen
in Bezug auf die Mittenlängsachse des Fallschirms
versetzt angeordnet sind.

Im Gegensatz zu bekannten Rotationsfallschirmen
verlaufen die Fangleinen damit nicht - in einer
gedachten Verlängerung - durch die Mittenlängsachse
des Fallschirms, sondern im Abstand zu dieser
(fiktiven) Achse.

Hierdurch ergibt sich eine "Schrägstellung" der
einzelnen Fangleinen zwischen Kappe und Lastträger.
Die hiermit verbundenen Vorteile sind folgende.
Bei einsetzender Rotation der Fallschirmkappe muß
diese nicht erst um eine bestimmte Strecke voreilen,
um über die Fangleinen den Lastträger
beziehungsweise die anhängende Last nachzu-

0144035

ziehen und damit gleichfalls in eine Rotationsbewegung zu versetzen, sondern das von der Fallschirmkappe übertragene Drehmoment kann unmittelbar über
die schräg gestellten Fangleinen auf den Lastträger
beziehungsweise die Last übertragen werden. Es
tritt insoweit eine praktisch verzögerungsfreie
Übertragung der Drehmomente auf, da die Schrägstellung
der Fangleinen bereits in einem Entfaltungszustand
des Fallschirmsystems gegeben ist, in dem sich
die Kappe auch selber noch nicht dreht. Beginnt
diese dann aber zu rotieren, so befinden sich die
einzelnen Fangleinen bereits in einer solchen Zuordnung,
daß der Lastträger beziehungsweise die Last unmittelbar nachgeführt werden kann.

Mit einem erfindungsgemäßen Rotationsfallschirm
ist ein außerordentlich hohes Drehmoment übertragbar,
ohne daß es zu einem Aufdrehen der Fangleinen kommt,
und zwar unmittelbar mit beginnender Rotation der
Fallschirmkappe.

In einer vorteilhaften Ausgestaltung der Erfindung
ist vorgesehen, daß die einzelnen Fangleinen in
unterschiedlichen Richtungen, bezogen auf die Rotationsrichtung der Kappe, angeordnet sind. Bei einer
solchen Ausführungsform sind beispielsweise die
Hälfte der Fangleinen in der späteren Rotationsrichtung
der Kappe "schräg" angeordnet, während die andere
Hälfte der Fangleinen in entgegengesetzter Richtung
"schräg" zwischen Kappe und Lastträger angeschlagen
ist. Auf diese Weise ist sichergestellt, daß sich
die einzelnen Fangleinen nicht aufdrehen, daß vielmehr
die schräge Anordnung der einzelnen Fangleinen
zueinander unverändert aufrechterhalten bleibt.
Ferner erfolgt eine unmittelbare Drehmomentenübertragung über die in Rotationsrichtung schräggestellten
Fangleinen, da diese von vornherein straff zwischen
Fallschirmkappe und Lastträger beziehungsweise
Last verlaufen.

Für die, in Bezug auf die Mittenlängsachse des
Fallschirms, versetzte Anordnung der einzelnen
Fangleinen bieten sich erfindungsgemäß verschiedene
Lösungsmöglichkeiten an. Die Fangleinen können
so versetzt angeordnet sein, daß eine Fangleine
jeweils mindestens einen Kreuzungspunkt mit einer
oder mehreren anderen Fangleinen hat. In einer
vorteilhaften Ausführungsform hat jede Fangleine
zwei Kreuzungspunkte mit jeweils zwei anderen Fangleinen.

Darüber hinaus bietet die Erfindung auch eine Ausführungsform an, bei der von einem Fangleinenanschlußpunkt an der Fallschirmkappe zwei oder mehrere
Fangleinen aus verlaufen, die dann jeweils an einem
eigenen Fangleinenanschlußpunkt am Lastträger angeschlagen sind. Dabei verlaufen die einzelnen
Fangleinen von ihrem gemeinsamen Anschlußpunkt vorzugsweise in unterschiedliche Richtungen zum Lastträger.
Dieselbe Ausführungsform kann auch umgekehrt gestaltet
sein, das heißt, daß von einem Fangleinenanschlußpunkt am Lastträger mehr als eine Fangleine aus
verläuft, wobei die einzelnen Fangleinen dann an
einzelnen Fangleinanschlußpunkten der Fallschirmkappe
angeschlagen sind.

Sofern die einzelnen Fangleinen eine gleiche Länge
aufweisen, und in gleichem Abstand zur Mittenlängsachse des Fallschirms am Lastträger befestigt sind,
befindet sich dieser, im vertikalen Fall des Fallschirms, in einer im wesentlichen horizontalen

- 6 -

0144035

Ausrichtung, sofern der Schwerpunkt des Lastträgers in der Mittenlängsachse des Fallschirmes liegt.

Es kann aber auch eine Ausführungsform gewünscht werden, bei der der Lastträger beziehungsweise die Last im horizontalen Fall des Fallschirmes schief angeordnet ist. Hierzu bietet sich insbesondere eine Ausführungsform eines erfindungsgemäßen Rotationsfallschirmes an, bei der die Fangleinen unterschiedlich lang ausgebildet sind, so daß sich automatisch eine Schrägstellung des Lastträgers beziehungsweise der Last ergibt, sofern die einzelnen Fangleinen in gewohnter Weise in gleichem Abstand zur Mittenlängsachse des Fallschirms angeordnet sind.

In einer weiteren Variante der Erfindung ist vorgesehen, daß die Umfangsabstände der Fangleinenanschlußpunkte an der Fallschirmkappe in Bezug auf den gefüllten Kappenzustand durch eine Umfangsleine gleich groß gehalten werden. Dabei sind die Abschnitte dieser Zugleine zwischen den einzelnen Fangleinenanschlußpunkten kürzer als der korrespondierende Umfang des Kappenrandes. Hierdurch kann zuverlässig verhindert werden, daß sich eine Bahn im Fall in ihrer Form verändert, insbesondere zusammengezogen wird. Das Fallverhalten des Fallschirms bei Ausrüstung mit der beschriebenen Zugleine kann so sehr konstant gehalten werden.

Die Erfindung stellt außerdem ein komplettes Bergungssystem zur Verfügung, bestehend aus einem Rotations-

0144035

fallschirm der vorstehend beschriebenen Art und einer daran anhängenden Last. Dabei kann die Last unmittelbar oder mittelbar, beispielsweise über einen zwischengeschalteten Teller, mit der Fallschirmkappe verbunden sein.

Bei einer Ausführungsform mit einem zwischen Kappe und Last eingeführten Körper kann dieser entweder so angeordnet sein, daß er bei vertikalem Fall des Fallschirmes horizontal angeordnet ist, oder aber, wie vorstehend anhand des Lastträgers bereits beschrieben, schräg steht.

An dem zwischengeschalteten Körper ist dann vorzugsweise eine drehfeste, aber biegbare Verbindung zur Last angeordnet, zum Beispiel eine flexible Welle oder ein drehfestes Stahlseil, wobei das Verbindungselement zwar Drehmomente aufnehmen muß, sich aber nicht verdrillen darf.

Die Last selber kann dann auch exzentrisch an dem jeweiligen Verbindungselement aufgehängt sein.

Weitere Merkmale der Erfindung sind Gegenstand der Unteransprüche sowie dieser Beschreibung.

In der Zeichnung sind Ausführungsbeispiele der Erfindung in vereinfachter Darstellungsweise wiedergegeben, welche nachstehend erläutert werden. Es zeigen:

Figur 1 eine perspektivische Ansicht eines erfindungsgemäßen Rotationsfallschirms mit anhängender Last,

Figur 2 eine ausschnittsweise Darstellung
einer verschubfesten Verbindung zweier
Fangleinenabschnitte,

Figur 3 ein Ausführungsbeispiel eines erfindungsgemäßen Bergungssystems in perspektivischer
Darstellung,

Figur 4 eine stufenweise Prinzipdarstellung
der Entfaltungs- und Falleigenschaften
eines erfindungsgemäßen Rotationsfallschirms
beziehungsweise Bergungssystems.

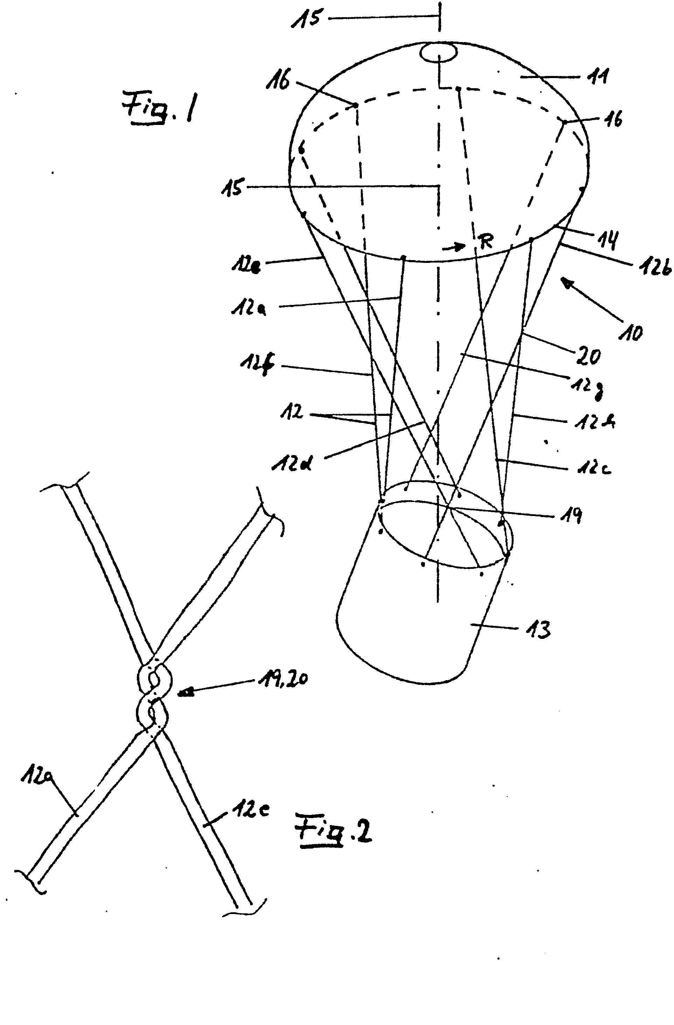

In Figur 1 ist ein Rotationsfallschirm 10 dargestellt,
im wesentlichen bestehend aus einer Kappe 11, die
über Fangleinen 12 mit einem Lastträger 13 verbunden
ist. Der Lastträger 13 ist im dargestellten Ausführungsbeispiel die Last selber.

Die Kappe 11 des Fallschirms ist in üblicher Weise
aus verschiedenen Bahnen hergestellt und weist
verschiedene (nicht dargestellte) Öffnungen auf,
durch die Luft strömen kann.

Am unteren Rand 14 der Kappe 11 sind in gleichen
Abständen zueinander insgesamt 8 Fangleinen 12
befestigt. Die Befestigung erfolgt dabei in üblicher
Weise, beispielsweise durch Nähen, Klemmen, Nieten,
Knoten usw.

Die Fangleinen 12 verlaufen nun vom unteren Rand
14 der Kappe 11 zum oberen Rand der Last 13, an
dem sie gleichfalls ortsfest angeschlagen sind.
Die Verbindung der Fangleinen 12 an der Last 13

0144035

erfolgt dabei in ähnlicher Weise wie an der Kappe
11.

Der Verlauf der Fangleinen 12 zwischen Kappe 11
und Last 13 ist nun derart, daß jede Fangleine 12
versetzt zur (gedachten) Mittenlängsachse 15 des
Fallschirms 10 angeordnet ist, das heißt, die einzelnen
Fangleinen 12 sind so angeordnet, daß sie keinen
insgesamt gemeinsamen Schnittpunkt ihrer gedachten
Verlängerungen in Richtung auf die Last 13 besitzen.

Die einzelne Fangleine 12 ist vielmehr so angeordnet,
daß sie, wenn man einen Längsschnitt durch den
Fallschirm legt, wobei sowohl der korrespondierende
Fangleinenanschlußpunkt 16 an der Kappe 11, als
auch die Mittenlängsachse 15 des Fallschirms 10
in der Schnittfläche liegen, in einem bestimmten
Winkel zu dieser gedachten Schnittfläche verläuft.

Bei dem in Figur 1 dargestellten Ausführungsbeispiel
ist die Rotationsrichtung der Fallschirmkappe 11
durch den Pfeil R dargestellt.

Von den insgesmat 8 Fangleinen 12 sind 4 Fangleinen
12a bis d so angeordnet, daß sie in Rotationsrichtung  R
schräg zwischen Kappe 11 und Last 13 verlaufen,
während die übrigen 4 Fangleinen 12e bis h mit
entgegengesetzter Neigung zwischen Kappe 11 und
Last 13 befestigt sind.

Aufgrund dieser gegenläufigen Anordnung der Fangleinen
12a bis d beziehungsweise 12e bis h kreuzt jede
Fangleine 12 mindestens zwei andere Fangleinen.

Beispielsweise passiert die Fangleine 12b die Fangleinen 12e und 12h in den Knotenpunkten 19, 20.

In den Knotenpunkten 19, 20 sind die sich jeweils kreuzenden Fangleinen verschubfest miteinander verbunden. In Figur 2 ist ein Ausführungsbeispiel einer derartigen verschubfesten Verbindung dargestellt. Hierbei sind die als Flechtleinen gestalteten Fangleinen 12 miteinander dreifach verspleißt, wodurch eine überaus sichere Verbindung der Fangleinen 12 untereinander erreicht wird.

So wird beispielsweise durch den Knotenpunkt 19 ein "festes" Dreieck gebildet, welches durch die Eckpunkte Knotenpunkt 19 und die Fangleinenanschlußpunkte der Fangleinen 12b und 12e an der Last 13 gebildet wird.

Den Knotenpunkten 19, 20, die, wie Figur 1 zu entnehmen ist, auch zwischen allen übrigen Fangleinen 12 bestehen, kommt insoweit besondere Bedeutung bei, als sie Verschiebungen der einzelnen Bahnen der Kappe 11 vermeiden können. Durch die Flexibilität der Kappe 11 käme es nämlich, wenn die Fangleinen nicht durch entsprechende Knotenpunkte miteinander ortsfest verbunden wären, zu Relativverschiebungen, die das Fallverhalten eines derartigen Fallschirmes ungünstig beeinflussen würden.

Anstelle der in Figur 2 dargestellten Verspleißungen können beispielsweise aber auch normale Knoten oder Vernähungen zwischen den Fangleinen 12 vorgenommen werden, wobei jedoch gewährleistet sein muß, daß es sich um verschubfeste Verbindungen handelt.

0144035

Bei dem in Figur 1 dargestellten Ausführungsbeispiel
ist die Last 13 schräg aufgehängt, das heißt, die
Oberfläche der Last 13 ist nicht parallel zu der
durch den unteren Rand 14 der Kappe 11 gebildeten
Fläche, oder anders ausgedrückt, die Oberfläche
der Last 13 ist bei vertikalem Fall des Fallschirms
10 nicht horizontal angeordnet. Dies wird dadurch
erreicht, daß die einzelnen Fangleinen 12 eine
unterschiedliche Länge aufweisen. Wie der Figur 1
ohne weiteres zu entnehmen ist, ist beispielsweise
die Fangleine 12e deutlich länger als die
Fangleine 12h.

Wird nun die Fallschirmkappe 11 in Rotationsbewegung versetzt, so sind die in Rotationsrichtung
schräg gestellten Fangleinen 12a bis d unmittelbar
stramm geführt, so daß sie ein unmittelbares Nachführen der Last 13 bedingen. Hierdurch wird die
Last 13 ohne Verzögerung in die gleiche Rotationsbewegung versetzt, die von der Kappe 11 ausgeht.
Trotz der Rotation der Last 13 kann es aber aufgrund
der erfindungsgemäßen Anordnung der Fangleinen
12 nicht zu deren Verdrillung kommen.

Ein Fallschirm mit den erfindungsgemäßen Merkmalen
hat ein außergewöhnlich gutes Fallverhalten, eine
besonders günstige Eigenstabilität und einen minimalen Pendelwinkel.

Das Fallverhalten kann noch weiter verbessert werden,
wenn im Bereich der Unterkante (Basis) 14 der Fallschirmkappe 11 eine Zugleine (nicht dargestellt) eingearbeitet ist. Diese Zugleine soll dann von einem Fangleinenanschlußpunkt zum anderen verlaufen und an den
Fangleinenanschlußpunkten jeweils befestigt sein.
Die Länge zwischen jeweils zwei benachbarten Fangleinenanschlußpunkten muß dabei geringer sein als die
zwischen den beiden Fangleinenanschlußpunkten gebildete Länge der Unterkante 14 der Kappe 11. Auf
diese Weise wird gewährleistet, daß auch bei luftgefüllter Kappe der Abstand der Fangleinenanschlußpunkte
zueinander gleich bleibt, so daß das Fallverhalten
des Fallschirmes nicht beeinträchtigt wird. Im
luftgefüllten Zustand ergibt sich damit die Form
eines Vielecks für die Zugleine (in Aufsicht),
wobei die Zahl der Ecken der Zahl der Fangleinen
entspricht. Die vorgesehene Zugleine ist ähnlich
wie eine Reffleine auf der Innenseite der Kappe
an deren unterer Umfangskante 14 angeordnet. Bei
gefüllter Kappe ist die Leine dann gerade gestrafft.

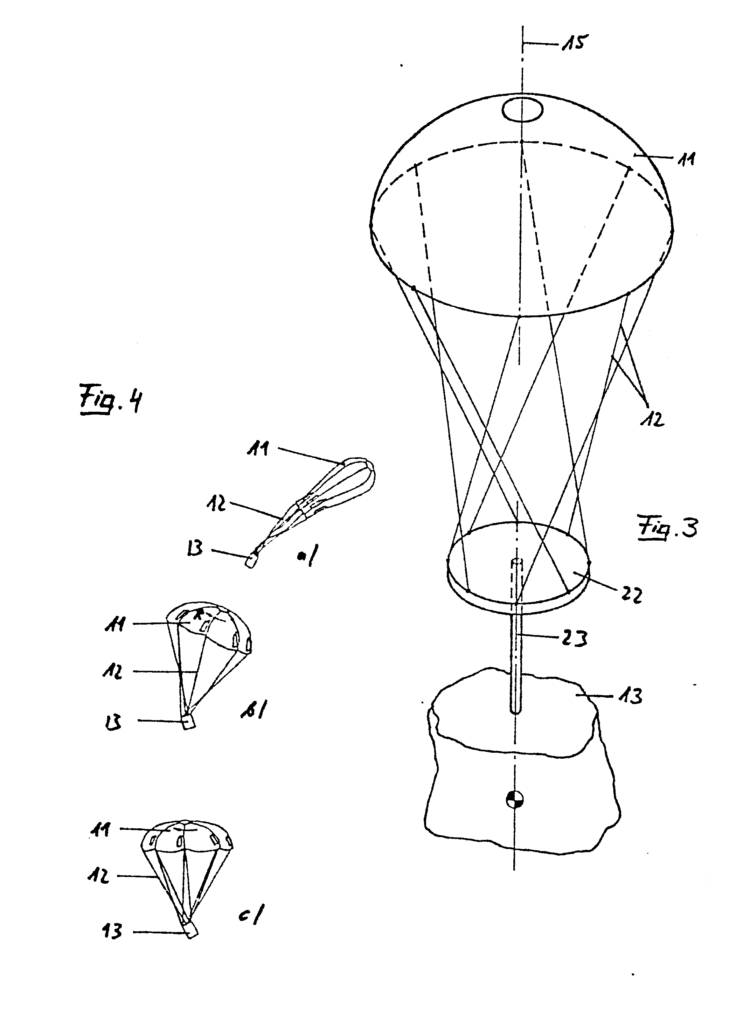

In Figur 3 ist ein Ausführungsbeispiel eines erfindungsgemäßen Bergungssystems dargestellt, bei dem zwischen
Rotationsfallschirm 10 und Last 13 ein Zwischenglied 22 angeordnet ist.

Der Verlauf der Fangleinen 12 zwischen Kappe 11
und dem Zwischenglied 22 entspricht dabei nahezu
vollständig dem in Figur 1 dargestellten. Allerdings
sind beim Ausführungsbeispiel gemäß Figur 3 die
Längen der einzelnen Fangleinen 12 gleich, so daß
sich eine im vertikalen Fall horizontale Anordnung
des Zwischengliedes 22 ergibt. Eine solche Anordnung
der Fangleinen 12 ist selbstverständlich auch beim
Ausführungsbeispiel gemäß Figur 1 möglich.

Vom Zwischenglied 22 verläuft eine flexible Welle 23
senkrecht nach unten, die anderendig an der Last
13 befestigt ist. Die Welle 23 ist dabei lösbar
zwischen dem Zwischenglied 22 und der Last 13 angeordnet, so daß diese nach dem Niedergang des
Fallschirms ohne weiteres leicht abgenommen werden
kann.

Die Last 13 kann exzentrisch an der Welle 23 aufgehängt sein.

Die Welle 23 oder eine sonstige an dieser Stelle
angebrachte Verbindung zwischen Kappe 11 und Last
13 muß so beschaffen sein, daß sie einerseits drehfest ist, andererseits aber eine biegbare Verbindung
zur Last 13 schafft. Insbesondere darf sie sich
nicht selbst aufdrehen.

In Figur 4 ist dargestellt, wie sich ein erfindungsgemäßer Fallschirm entfaltet und anschließend herabsinkt. Auch in diesem Ausführungsbeispiel ist die
Last 13 schräg aufgehängt.

Nach der Fallschirmauslösung (Stufe a) entfaltet
sich der Fallschirm so weit, daß er seine volle
Füllung erreicht (Stufe b). Dabei beträgt die
Rotation der Fallschirmkappe beispielsweise 2 Umdrehungen/Sec.. Kurze Zeit später ist dann der
stationäre Zustand erreicht, wobei sich die Kappe
11 und Last 13 synchron zweimal pro Sekunde drehen.

Ein erfindungsgemäßer Rotationsfallschirm bzw.
ein komplettes Bergungssystem bieten sich für mannigfaltige Einsätze an. Beispielsweise sei hier die
Anwendung zu Ortungszwecken bzw. der Einsatz von
Kameras für Rundum- Aufnahmen genannt.

Das übertragene Drehmoment ist um so größer, je weiter entfernt die Fangleinenanschlußpunkte an der Last 13 von der (gedachten) Mittenlängsachse des Fallschirmes angeordnet sind.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

Patentansprüche

P a t e n t a n s p r ü c h e

1.  Rotationsfallschirm mit einer Kappe, die über Fangleinen mit einem Lastträger verbunden ist, dadurch
    gekennzeichnet, daß die Fangleinen (12) in Bezug
    auf die Mittenlängsachse (15) des Fallschirms (10)
    versetzt angeordnet sind.

2.  Fallschirm nach Anspruch 1, dadurch gekennzeichnet,
    daß die Fangleinen (12) so versetzt angeordnet sind,
    daß eine Fangleine (12a-h) jeweils mindestens einen
    Kreuzungspunkt (19,20) mit einer oder mehreren anderen
    Fangleinen (12a-h) hat.

3.  Fallschirm nach Anspruch 2, dadurch gekennzeichnet,
    daß jede Fangleine (12a-h) zwei Kreuzungspunkte (19,20)
    mit jeweils zwei anderen Fangleinen (12a-h) hat.

4.  Fallschirm nach einem der Ansprüche 1 bis 3, dadurch
    gekennzeichnet, daß von einem oder mehreren der Fangleinenanschlußpunkte(16) an der Kappe (11) zwei oder mehrere Fangleinen (12a-h) aus verlaufen, die anderendig jede für sich befestigt sind.

5. Fallschirm nach einem der Ansprüche 1 bis 4, dadurch gekennzeichnet, daß die Fangleinen (12) unterschiedlich lang ausgebildet sind.

6. Fallschirm nach einem der Ansprüche 1 bis 5, dadurch gekennzeichnet, daß die Fangleinen (12) aus einer Flechtleine bestehen.

7. Fallschirm nach einem der Ansprüche 1 bis 6, dadurch gekennzeichnet, daß die Fangleinen (12) an dem oder den Kreuzungspunkt(en) (19,20) verschubfest miteinander verbunden sind.

8. Fallschirm nach einem der Ansprüche 1 bis 7, dadurch gekennzeichnet, daß die Fangleinen (12) an dem oder den Kreuzungspunkten (19,20) durch Verspleißungen miteinander verbunden sind.

9. Fallschirm nach einem der Ansprüche 1 bis 8, dadurch gekennzeichnet, daß die Fangleinen (12) in unterschiedlichen Richtungen, bezogen auf die Rotationsrichtung der Kappe (11), angeordnet sind.

10. Fallschirm nach einem der Ansprüche 1 bis 9, dadurch gekennzeichnet, daß die Fangleinenanschlußpunkte an der Kappe (11) über eine Zugeinrichtung miteinander verbunden sind, wobei die Länge der Zugeinrichtung zwischen den einzelnen Fangleinenanschlußpunkten geringer ist, als die Länge der korrespondierenden

**0144035**

Kante (14) der Fallschirmkappe (11).

11. Fallschirm nach Anspruch 10, dadurch gekennzeichnet, daß die Zugeinrichtung eine Leine ist.

12. Bergungssystem mit einem Rotationsfallschirm nach einem der Ansprüche 1 bis 11 und einer daran angehängten Last (13), wobei zwischen Kappe (11) und Last (13) ein Körper (22) angeordnet ist, von dem aus die Fangleinen (12) zur Kappe (11) verlaufen.

13. Bergungssystem nach Anspruch 12, dadurch gekennzeichnet, daß der Körper (22) eine runde Platte ist.

14. Bergungssystem nach Anspruch 12 oder 13, dadurch gekennzeichnet, daß vom Körper (22) ein drehfestes, aber biegbares Verbindungselement (23) zur Last (13) verläuft.

15. Bergungssystem nach Anspruch 14, dadurch gekennzeichnet, daß das Verbindungselement (23) eine flexible Welle oder ein drehfestes Stahlseil ist.

Zusammenfassung

0144035

Fig. 1

Fig. 2

15

11

12

_Fig. 4_

11

12

13    a/

11

12

13    b/

11

12

13    c/

_Fig. 3_

22

23

13

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 443 196 (J.R. MITCHELL)<br><br>* Seite 1, Zeilen 25-40; Ansprüche 4,5,6; Figur * | 1-4, 7,9 | B 64 D 17/24 |
| X | US-A-2 797 885 (D.T. BARISH)<br><br>* Figuren 1,3 * | 10 | |
| A | US-A-3 433 441 (A.F. CUMMINGS)<br><br>* Figuren 5,6,11,12,20,21; Spalte 22, Zeilen 6-12 * | 1,2,3, 5 | |

RECHERCHIERTE SACHGEBIETE (Int. Cl.4)

B 64 D
B 64 C

Der vorliegende Recherchenbericht wurde für alle Patentansprüche erstellt.

| Recherchenort | Abschlußdatum der Recherche | Prüfer |
|---|---|---|
| DEN HAAG | 28-02-1985 | MARTINOZZI G. |